# EUROPEAN PATENT SPECIFICATION

(11) **EP 1 513 410 B1**
(45) Date of publication and mention of the grant of the patent: **03.12.2008**
(21) Application number: 03756998.5
(22) Date of filing: 21.05.2003
(51) Int. Cl.: A23C 9/154, A23C 9/13, A23L 1/035

(54) **GELATINE FREE DAIRY DESSERT**
GELATINEFREIES MILCHDESSERT
DESSERT LAITIER SANS GELATINE

(30) Priority: 07.06.2002 EP 02077220
(43) Date of publication of application: 16.03.2005
(73) Proprietor: Campina B.V., 5301 LB Zaltbommel (NL)
(72) Inventor: STEHOUWER, Floris, NL-5211 AD's-Hertogenbosch (NL); KNIP, Jacob, NL-3445 DB Woerden (NL)
(74) Representative: Bot, David Simon Maria
(86) International application number: PCT/EP2003/005449
(87) International publication number: WO 2003/103410

(56) References cited:
- EP-A- 0 300 503
- EP-A- 0 649 599
- EP-A- 0 659 347
- GB-A- 1 019 147
- GB-A- 1 053 094
- US-A- 3 510 316
- US-A- 4 542 035
- US-A- 6 025 007
- DATABASE FSTA [Online] INTERNATIONAL FOOD INFORMATION SERVICE (IFIS), FRANFURT/MAIN, DE; INOKI S ET AL: "Preparation of powdered mixture for making frozen desserts of high stability of shape." Database accession no. 74-4-01-p0106 XP002221578 & JAPANESE PATENT 42189/71 1971,
- MURILO HADAD PIRES: "GELATINE REPLACERS AN INDUSTRY SEARCHES FOR ALTERNATIVES" FOOD MARKETING AND TECHNOLOGY, NUERNBERG, DE, vol. 15, no. 2, April 2001 (2001-04), pages 7-8,10, XP001124341 ISSN: 0932-2744

## Description

The invention relates to a gelatine free dairy dessert, to a composition for use as a gelatine replacer, in particular in dairy desserts and to a method for the preparation of such a composition.

Within the context of the present application the term "gelatine free" means that the dairy dessert concerned is substantially free of gelatine, i.e. that less than 0,5 wt.% gelatine is present whereby the percentage is based on the total composition.

Dairy desserts are often complicated mixtures comprising a water phase, wherein solid and liquid components are mixed, dissolved and/or dispersed. In the desserts, structuring the water phase is essential for the dessert to obtain the desired mouthfeel, flavour, taste and appearance. Structuring the water phase is often accomplished with gelatine. The advantage of gelatine is the fact that is has good cold setting properties and a unique melting behaviour in that it gels rather slowly on cooling, having a low viscosity, resulting in good processability at low temperatures. Gelatine is also shear resistant: even after being subjected to high shear forces, e.g. during the preparation process, gelatine retains its gelling capacity. Thus, gelatine is particularly useful for use in desserts.

However, gelatine is a hydrolysis product of collagen, the major intercellular protein found in the connective tissues of animal skins and bones. The animal origin of gelatine is a major disadvantage, rendering the use thereof undesired for e.g. vegetarian diets and might violate certain religious food rules. The main disadvantage however is the risk of contamination of gelatine containing food products with animal diseases, in particular since the outbreak of bovine spongiform encephalitis (BSE). In the art, several attempts have been made to replace collagen and gelatin in food products.

WO 98/34499 describes the replacement of gelatine by a mixture of agar and galactomannans. EP 0 949 295 describes a composition for gelatine replacement, comprising wheat fibres and modified starch. WO 00/36930 describes a hydrocolloidal gelling composition comprising alginate and galactomannans, whereas US 6,093,439 describes a viscosifier for cultured dairy products, comprising a starch composition. However, the above-mentioned gelatine replacement compositions that are based on a plurality of different hydrocolloids, have the disadvantage that gelling takes place fast at low temperatures, therewith rendering the product badly processable at temperatures in the range of 5-20°C, required for processing of dairy products, in particular dairy desserts. Also, the onset of gelation of many hydrocolloids is at a higher temperature (e.g. 40°C) than gelatine (approx 15°C). Further, the shear resistance of the above-mentioned hydrocolloids is substantially lower than that of gelatine; in order to compensate for the loss of texture induced by shear, the hydrocolloids have to be added in high amounts resulting in a negative effect on the taste of the food product and conferring thereto a sticky and unpleasant mouthfeel. Further, the above hydrocolloids loose a substantial portion of their gelling properties when subjected to high shear forces, therewith limiting the processability of the food products comprising said hydrocolloids. Thus, there is great need for gelatine free dairy desserts, comprising an alternative and improved gelatine replacer.

It is important to note that gelatine is in particular useful as e.g. gelling agent in low fat food products, i.e. comprising less than 10 w/w% fat, in particular less than 5 w/w% fat. In food products of a relatively high fat content in the range of 30 w/w% or higher, such as high fat spreads, e.g. margarine, the role of the gelling agent is however of less importance, as the fat itself plays an important role in conferring the proper consistency to the product.

The abstract of JP 42189/71 teaches a composition of a fat, caseinate or milk SNF and a texturiser such as polysaccharide, and further comprising emulsifier selected from 15 - 20% esters of saturated fatty acids and 10 - 16% esters of unsaturated fatty acids, wherein the ratio of the two is 1:0.7-8, and the use of the composition - together with a viscoliser - for manufacture of a frozen dessert with a desirable texture and high stability of shape at room temperature.

EP-A-649.599 discloses a stabiliser composition particularly useful for preparing an aerated dairy dessert, wherein the composition comprises 60 - 80 wt% of an emulsifier from mono- and diglycerides of fatty acids. By "fatty acid" those are understood which are authorized in food industry, such as oleic acid, palmitic acid. Lactic acid esters of mono- and diglycerides of fatty acids from the class E472b are most preferred.

The invention now provides a novel gelatine free dairy dessert, comprising less than 10 w/w% fat and an unsaturated emulsifier.

The term "dairy dessert" is understood to comprise dessert products, based on dairy products, in particular neutral and acid desserts, such as mousses, creme liégeoise, yogurt, pudding, creme dessert and custard creme, pastry cream, bavaroise (Bavarian cream), quark, heat treated yoghurt or quark, flan, vla, etc.

The term "unsaturated emulsifier" is known in the art. Such emulsifiers are derived from unsaturated fats and constitute of a mixture of mono- and diglyceride glycerol esters of unsaturated fatty acids, also referred to as mono- and diglycerides, respectively. Examples of commercially available unsaturated emulsifiers are e.g. the emulsifiers Dimodan RT, P Pel B, U/J, UP/B, S, OT Pel and LS of Danisco, Denmark, Grindsted Mono Di SL60, Grindsted PS 217 and PS 211 of Danisco, Denmark, Palsgaard 0094, 0095, 0098 and 0291 of Palsgaard, Denmark and Myverol 18-35K, 18-92K and 18-50XL PL of Quest, the Netherlands. According to the invention, both cis- and trans- unsaturated emulsifiers, or a combination thereof can be used.

It has surprisingly been found that replacement of gelatine by an unsaturated emulsifier, optimal melting behaviour and shear resistance are obtained, that are comparable with those, conferred by gelatine.

The gelatine free dairy dessert according to the present invention preferably comprises 8 w/w% or less, more preferably 7% or less, most preferably 5% or less fat.

The gelatine free dairy dessert according to the invention comprises 0,2-2,5 w/w%, preferably 0,6-2,5 w/w%, more preferably 0,8-2,5 w/w% and most preferably 1,0-2,0 w/w% unsaturated emulsifier. It has been found that within the above specified ranges, the required shear resistance and melting behaviour is obtained, resulting in a dessert product, having the required gelly texture and being well processable. The said unsaturated emulsifier preferably comprises unsaturated monoglycerides, as it is believed that the above improved qualities are mainly conferred by unsaturated monoglycerides. Based on the total weight content of emulsifier, the emulsifier preferably comprises 50-100 w/w%, more preferably 50-95 w/w% unsaturated monoglycerides, that may be in destilled form.

Preferably, the dessert comprises milk- and/or soy protein, preferably milk protein, preferably chosen from casein and caseinate; the milk protein can be added to the dessert, but may also be an intrinsic component of the dessert. Other suitable milk proteins are e.g. whey proteins. Milk protein and also soy protein facilitates spray drying which is advantageous for the preparation of an emulsifier composition that can be spray dried and used as ingredient for the preparation of the dessert. Such composition is further discussed below.

The dessert according to the invention preferably has a pH between 3.8-7.5, the usual range for acid and neutral dessert products.

Preferably, the dessert according to the invention comprises 0-15 w/w% carbohydrate. The carbohydrate is preferably chosen from the group, consisting of glucose, glucose solids (e.g. glucose syrup), sucrose, fructose, maltodextrins, lactose, starch, modified starch, artificial starch or a combination of two or more thereof. Cellulose and inulin are also suitable. It has been found that by incorporation of carbohydrates, the water binding properties and the mouthfeel of the dessert are improved. Carbohydrates therefore have an important role as filling agent. Incorporation of carbohydrates also confers an attractive taste to the dessert. In addition, artificial sweeteners, such as Aspartam may be added to improve the taste, if necessary.

In order to further optimise the mouthfeel of the dessert according to the present invention, the dessert preferably comprises a hydrocolloid, preferably in the range of 0-10 w/w%. Any hydrocolloid, suitable for incorporation in a dairy dessert can be used; such hydrocolloids are known in the art. Examples thereof are alginate, pectin, carrageenan, starch, modified starch, carboxymethyl cellulose, galactomannans, such as guar gum and locust bean gum.

The hydrocolloid may have properties of a thickening agent, therewith preventing syneresis and phase separation, improving stability and providing body and mouthfeel to the products.

In a preferred embodiment, the dessert according to the invention is an aerated dessert. The term "aerated" means that the dessert is expanded in volume by the incorporation of gas, in particular nitrogen or air. This can be achieved by beating, whipping, aerating or by subjecting the dessert formulation to the action of a propellant, e.g. by incorporating the dessert formulation in an aerosol. Examples of such products are mousses and cremes, such as creme liègeoise, vanilla mousse, chocolate mousse, decoration cream, Bavarian cream, yoghurt mousse, quark mousse. It has been found that optimal stability of such aerated desserts is provided by replacement of the gelatine by the unsaturated emulsifier according to the present invention, optionally combined with a hydrocolloid, such as outlined above. However, the dairy dessert according to the present invention may also be non-aerated; in non-aerated desserts, incorporation of the unsaturated emulsifier according to the invention confers an attractive texture to the dessert, comparable with that obtained by gelatine.

The invention further relates to a composition for use as a gelatine replacer, in particular in dairy desserts, comprising 20-70 w/w% unsaturated emulsifier, 2-10 w/w% of milk protein and/or soyprotein, and 20-78 w/w% CARBOHYDRATES. . The composition can be used as ingredient in the preparation of a gelatine free dairy dessert according to the invention. As spray drying aid, preferably milk- and/or soy protein is used, preferably milk protein, such as caseinate is used, although any food grade spray drying aid, known in the art can be used. The filling agent preferably comprises carbohydrates as outlined above, that also may function as sweetening agent; however, any food grade filler can be used. The filler confers improved mouthfeel and melting behaviour to the dessert; in case a hydrocolloid is incorporated, additional improvement to the mouthfeel may be obtained. Optionally the composition also comprises 0-50 w/w% fat, preferably chosen from milk fat, butter fat, and vegetable fat, or a combination thereof.

The composition according to the invention comprises:
20-70 w/w%, preferably 30-50 w/w%, unsaturated emulsifier
2-10 w/w%, preferably 4-8 w/w%, milk- and/or soy protein,
preferably milk protein, more preferably comprising caseinate, and
20-78 w/w%, preferably 42-66 w/w% carbohydrate.

In an attractive embodiment, the composition according to the invention further comprises
0-50 w/w%, preferably 5-25 w/w%, hydrocolloid, chosen from carrageenan, guar gum, carboxymethyl cellulose, pectin, alginate and modified starches,
0-50 w/w%, preferably 5-25 w/w%, fat, chosen from milk fat, butter fat and vegetable fat,
0-40 w/w%, preferably 5-20 w/w%, additional emulsifier, chosen from saturated and unsaturated emulsifiers or a mixture thereof.

Examples of saturated emulsifiers are glycerol monostearate, glycerol monopalmitate, lactic acid esters of monoglycerides, acetic acid esters of monoglycerides, citric acid esters of monoglycerides, di-acetyltartaric acid esters of monoglycerides and polyglycerol esters. Examples of unsaturated emulsifiers are given above. The incorporation of said emulsifiers is in particular advantageous in aerated desserts for optimising the bubble size therein.

The invention further relates to a method for the preparation of the composition according to the invention comprising the steps of:
a) preparing a liquid fat phase comprising the unsaturated emulsifier and, if present, the fat,
b) preparing a water phase comprising the filling agent,
the spray drying aid being comprised in the liquid or the fat phase or both,
c) combining the fat phase of a) with the water phase b), and optionally
d) homogenising the mixture of c), and/or, optionally,
e) spray drying the homogenate of d).

The emulsifier, and, if present, the fat, can be combined with the water phase in liquid form, e.g. by providing the emulsifier, and, if present, the fat in melted form. The spray drying aid preferably comprises milk- and/or soy protein, whereas the filling agent preferably comprises carbohydrates, as explained above.

The spray drying aid can be added to the liquid or the fat phase or to both; the skilled person will be able to determine to what phase the spray drying aid can advantageously be added; however, e.g. milk protein can be added to any of the said phases with a slight preference for the water phase.

According to the method, the composition according to the invention can be obtained in liquid or in dry form. The optional spray drying is preferred in order to obtain a powdered product that can be added in the recipe of the dessert during the preparation thereof. However, the composition can also be added in liquid form. Homogenation is optional but may be preferred, depending on the composition and dessert to be prepared therewith.

In case hydrocolloids are incorporated in the composition, said hydrocolloids can be co-spray dried or added to the composition after spray drying or be incorporated in the composition before spray drying, i.e. in the water phase.

The invention will now be further illustrated by way of nonlimiting examples.

### EXAMPLES

### 1. Preparation of gelatin replacer composition (composition A)

### 1.1 Recipe

| | |
|---|---|
| Glycodry 330 ¹ (glucose solids) | 64.00 % |
| Dimodan RT or P Pel B ² (emulsifier) | 30.00 % |
| Na-caseinate EM7 ³ (milk protein) | 6.00 % |

| | |
|---|---|
| 1 Amylum Group, Belgium 2 Daniso Cultor, Denmark 3 DMV International, The Netherlands | |

Optionally, other ingredients can be co-spray dried. The weight percentages are based on the total weight of the composition.
- 0-50 w/w% Hydrocolloids (carrageenan, guar gum, CMC, xanthan gum, modified starches, pectin, alginate)
- 0-50 w/w% Milk fat or vegetable fat (hardened palm kernel oil, hardened coconut oil)
- 0-40 w/w% Other emulsifiers, saturated and/or unsaturated such as mono- and diglycerides or mixtures thereof, as identified above.

### 1.2 Processing

The fat phase comprises the Na-caseinate and the emulsifier (Dimodan RT). The Na-caseinate is dispersed into the melted emulsifier (Dimodan RT) at 75°C.

The water phase comprises water and glucose solids (glucose syrup). At 75°C, the fat phase and the water phase are combined under vigorous stirring. The mixture is subsequently homogenized at 75°-80°C (150/200 bar) and spray dried.

The mixture before drying has a total solids content of ± 60% w/w. The spray dried powder has a water content of approximately 0-4% w/w.

### 2. Preparation of chocolate mousse based on composition A

### 2.1 Recipe

| | |
|---|---|
| Milk (3.5% fat) | 75.90 % |
| Sugar | 12.00 % |
| Real chocolate | 5.00 % |
| Cocoa powder ¹ | 3.80 % |
| Composition A ² | 3.30 % |

| | |
|---|---|
| 1 D11S, ADM Cocoa, The Netherlands 2 DMV International, The Netherlands | |

Optionally, 0-10 w/w%, based on the total weight of the dessert, hydrocolloids (carrageenan, pectin, alginate, guar gum, CMC, modified starches) can be added.

### 2.2 Processing

- Dissolve the dry ingredients into the cold milk and stir the mixture for at least ½ hour.
- Heat to ± 40°C and add the real chocolate.
- Apply upstream homogenization at 70°C (100/0 bar) (optional)
- Pasteurize 5'/85°C, or 2-10 s UHT treatment at 135-145°C.
- Cool to 10-15°C and whip on a continuous aerator (e.g. a Monomixer from Mondomix, the Netherlands) to an overrun of 70-150%. Speed mixing head: 200-600 rpm; system pressure 1-3 bar. Nitrogen was applied as aeration gas.
- Fill cups and store at 5°C.

### 2.3 Characteristics

The gel strength of the mousse obtained from recipe 2.1 was measured using a Stevens Texture Analyzer (distance 25 mm, speed 2 mm/s), after 48 hours at 5°C. Loads [g] ranged from 30-90 grams. For these measurements, a cylinder-shaped geometry was used, having a diameter of 12,0 mm, a height of 35 mm and a weight of 6.20 g.

### 3. Preparation of vanilla mousse based on composition A

### 3.1 Recipe

| | |
|---|---|
| Skimmed milk | 71.95 % |
| Cream (40% fat) | 12.50 % |
| Sugar | 10.00 % |
| Composition A ¹ | 5.00 % |
| Satiagel DF52 ² (carrageenan) | 0.20 % |
| CL 355 ³ (carrageenan) | 0.20 % |
| Vanilla flavour ⁴ | 0.15 % |

| | |
|---|---|
| 1 DMV International, The Netherlands 2 Degussa Texturant Systems, Belgium 3 Danisco Cultor, Denmark 4 15.02.4842, IFF, The Netherlands | |

Optionally, 0-10 w/w% hydrocolloids (carrageenan, guar gum, pectin, alginate, CMC, modified starches) can be added.

### 3.2 Processing

The processing is identical to that of example 2.2 above.

### 3.3 Characteristics

The gel strength of the mousse obtained from recipe 3.1 was measured according to example 2.3.

### 4. Preparation of demouldable pudding based on composition A

### 4.1 Recipe

| | |
|---|---|
| Milk (1.5% fat) | 77.15 % |
| Sugar | 11.00 % |
| Cream (40% fat) | 4.45 % |
| C*gel 70001 ¹ (native starch) | 2.40 % |

| | |
|---|---|
| 1 Cerestar, The Netherlands 2 DMV International, The Netherlands | |

Optionally, 0-10 w/w% hydrocolloids can be added (carrageenan, guar gum, pectin, alginate,CMC, modified starches).

### 4.2 Processing

- Dissolve the dry ingredients into the cold milk + cream. Stir for at least ½ hour.
- Apply upstream homogenization at 60°C (100/0 bar) (optional).
- Heat to 90°C and hold for 20 minutes.
- Cool to 70°C and fill / Cool to 20°C and fill aseptically.
- Store cups at 5°C.

### 4.3 Characteristics

Gel strength of the pudding obtained from recipe 4.1 was measured according to example 2.3.

### 5. Gelatin free yogurt mousse

### 5.1A Recipe A

| | |
|---|---|
| Milk (3.5% fat) | 68.00 % |
| Cream 40% fat | 4.00 % |
| Saccharose | 8.00 % |
| Skimmed milk powder | 1.00 % |
| Yoghurt culture ¹ | + |

### 5.1B Recipe B

| | |
|---|---|
| Water | 10.00 % |
| Composition A ² | 5.00 % |
| Sugar | 4.00 % |

| | |
|---|---|
| 1 yoghurt-culture YC 380, Chr. Hanssen, Denmark 2 DMV International, The Netherlands | |

### 5.2A Processing A

- Dissolve sugar, skimmed milk powder and cream into the milk at 10-40°C
- Heat till 65 °C.
- Homogenise: 65 °C, 200/0 bar.
- Pasteurise: 6 min. 95°C.
- Cool down to fermentation temperature of 32°C
- Add culture
- Incubate until final pH is reached, approx. pH 4,50

### 5.2B Processing B

- Dissolve sugar and Composition A in water
- Pasteurise mixture 5 min. at 85°C
- Cool to approx. 30°C

- Recipes A and Recipe B are mixed for at least 15 min.
- Cool mixture to 10-15°C
- Whip with a continuous aerator to an overrun of 70-120%
- Fill cups and store at 5°C.

### 6. Preparation of aerated bakery cream (yellow cream) based on composition A

### 6.1 Recipe

| | |
|---|---|
| Skimmed milk | 72,85% |
| Sugar | 11,50% |
| DP211(1) (fatconcentrate) | 7,00% |
| Composition A | 8,30% |
| Satiagel DF52 (2) (carrageenan) | 0,10% |
| Satiagel AMP35(2) (carrageenan) | 0,05% |
| 15.02.4842 (3) (Vanilla flavour) | 0,10% |
| Annatto (colourant) | 0,10% |

| | |
|---|---|
| 1. DMV International, The Netherlands 2. Degussa Texturant Systems, Belgium 3. IFF, The Netherlands | |

### 6.2 Processing

- Dissolve the dry ingredients into the cold milk and stir the mixture.
- Apply upstream homogenization at 70 °C (100/0 bar)
- Pasteurize 5 minutes / 85 °C, or 2 - 10 s UHT treatment at 135 - 145 °C
   a) Cool to 15 °C and whip on a continuous aerator (e.g. a Mondomixer from Haas-Mondomix B.V., the Netherlands) to an overrun of 70 - 150 %. Speed of the mixing head: 200 - 600 rpm; system pressure 1-3 bar. Nitrogen was applied as aeration gas.
   b) Or cool to 5 °C without whipping, store for a chosen period of time at 5°C (for example 24 hours) and whip (as under a) with a continuous aerator to an overrun of 70 to 150 % or with a planetary mixer (e.g. Hobart, USA).
      When the recipe obtained has been UHT treated (2-10 sec.; 135-145°C) it can be stored, before whipping; for a chosen period of time (for example 24 hours); at roomtemperature (20°C).
- Use cream for filling e.g. spongecakes and puff pastry products
- Store at 5 °C

### Comparative examples

### C1. Gelatin containing chocolate mousse

### C1.1 Recipe

| | |
|---|---|
| Milk (3.5% fat) | 72.80% |
| Saccharose | 12.00% |
| Chocolate | 5.00% |
| Whipping base DP73 ¹ | 5.00% |
| Cocoa powder² | 3.80% |
| Gelatin 260 bloom ³ | 1.20% |
| Stabiliser ⁴ | 0.20% |

| | |
|---|---|
| 1 DMV International, The Netherlands 2 D-11-S, ADM Cocoa, The Netherlands 3 PB Gelatins, Belgium 4 Satiagel ADG 14, Degussa Texturant Systems Benelux BV, Belgium | |

### C1.2 Processing

- Mix the stabilizers with the other powder components and dissolve into the milk.
- Heat to about 50 °C.
- Melt the real chocolate and add to the mixture.
- Pasteurize: 5 min., 85°C.
- Homogenize: 75°C, 100 bar.
- Cool rapidly to 10-15 °C.
- Whip on a continuous aerator to an overrun of approx. 100%.
- Fill cups and store at 5°C.

### C2. Gelatin containing vanilla mousse

### C2.1 Recipe:

| | |
|---|---|
| Skimmed milk | 67.30 % |
| Dairy cream, 38% fat | 18.50 % |
| Sugar | 12.00 % |
| Cremodan®Mousse 34 ¹ | 2.20 % |
| (emulsifier + gelatin) | |
| Vanilla flavouring | + |
| Colour | + |

| | |
|---|---|
| 1 Danisco Cultor, Denmark. | |

### C2.2 Processing:

- Mix the stabilizers with the other powder components and dissolve into the milk.
- Pasteurize: 5 min., 85°C.
- Homogenize: 75°C, 100 bar.
- Cool rapidly to 10-15 °C.
- Whip on a continuous aerator to an overrun of approx. 100%.
- Fill cups and store at 5°C.

### C3. Gelatin free chocolate mousse

### C3.1 Recipe

| | |
|---|---|
| Cream (40% fat) | 14.0-15.0 % |
| Sugar | 10.0-14.0 % |
| Cocoa powder | 5.0 % |
| Skimmed milk powder | 4.0 % |
| Protanal® XP 3505 alginate ¹ | 0.4-0.6 % |
| Lactogel® FC 3263 carrageenan ¹ | 0.25-0.35 % |
| Lactic acid ester of mono & diglycerides | 0.5 % |
| Full fat milk | to 100 % |

| | |
|---|---|
| 1 FMC BioPolymer, Belgium | |

### C3.2 Processing

- Blend milk and cream and pre-heat to 75-80°C
- Dry blend all solids and disperse in the milk under medium agitation
- Homogenize at 75°C (200 bar)
- Apply UHT treatment at 135-140 °C for 4-10 sec.
- Cool mix to 10-15 °C and whip to desired overrun with a Mondomixer® or similar.
- Fill and store at 5°C.

### C4. Gelatin containing demouldable vanilla pudding

### C4.1 Recipe

| | |
|---|---|
| Milk (1.5% fat) | 84.10% |
| Saccharose | 12.00% |
| Modified starch¹ | 2.00% |
| Starch² | 0.50% |
| Gelatin 270 bloom³ | 1.20% |
| Stabiliser⁴ | 0.20% |
| Coluring | + |
| Flavouring | + |

| | |
|---|---|
| 1 C*Polar Tex 06719, Cerestar, The Netherlands 2 Waxy maize 04201, Cerestar, The Netherlands 3 PB Gelatins, Belgium 4 Carrageenan LP60, Degussa Texturant Systems, Belgium | |

### C4.2 Processing

- Mix the stabilizers with the other powder components and dissolve into the milk.
- Pasteurize: 20 min.92°C.
- Cool rapidly to 70 °C for hot filling or cool down to approx. 20°C.
- Fill cups, cool product to 5°C and store at 5°C.

### C5. Gelatine containing aerated bakery cream (yellow cream), prepared with a liquid base and separate gelatine-injection during whipping/aerating

### C5.1 Recipe of the liquid base

| | |
|---|---|
| Skimmed milk | 70,40% |
| Sugar | 16,70% |
| DP211(1) (fatconcentrate) | 7,30% |
| DP73(1) (toppingbase) | 5,20% |
| Satiagel ADF24 (2) (carrageenan) | 0,20% |
| Vanilla flavour 15.02.4842 (3) | 0,10% |
| Annato (colourant) | 0,10% |

| | |
|---|---|
| 1. DMV International, The Netherlands 2. Degussa Texturant Systems, Belgium 3. IFF, The Netherlands | |

### C5.2 Processing

- Dissolve the dry ingredients into the cold milk and stir the mixture.
- Apply upstream homogenization at 70 °C (100/0 bar).
- Pasteurize 5 minutes / 85 °C, or 2 - 10 s UHT treatment at 135 - 145 °C.
- Cool to 7 °C and store in a tank.

### For the processing in e.g. a bakery

- Dissolve 1 part of gelatine (270 bloom) in 4 parts of water and heat to 70 - 80 °C.
- Cool the solution to app. 35 - 45 °C and keep it at this temperature.
- Pump a continuous flow of liquid base as decribed above at 2 - 8 °C into a continuous aerator (e.g. a Mondomixer from Haas-Mondomix B.V., the Netherlands)
- Inject, during mixing and aerating, 4% w/w of the gelatine-solution in 96 % w/w of liquid bakery cream base in the mixinghead of the aerator. Aerate to an overrun of 70 - 150 %. Speed of the mixinghead: 200 - 600 rpm; system pressure 1-3 bar. Nitrogen was applied as aeration gas.
- Use the cream for filling e.g. spongecakes and puff pastry products
- Store at 5 - 7 °C.

Upon comparison of the products of example 6 (option 6.2.b) and comparative example 5 (C5) it appeared that the product according to the invention had a similar smooth texture and creamy mouthfeel as the reference containing gelatin. The method used in example 6 is very expedient in order to produce yellow cream on an industrial scale when compared to the prior art method according to comparative example 5.

In example 6 the cumbersome process of injecting a pre-prepared gelatin as in C5 can be omitted which is a great advantage over the prior art.

The mixture of recipe 6.1 can be stored at 5°C (or at room temperature when UHT treated) after preparation and pasteurization and whipped prior to use according to 6.2.b.

The sensoric evaluation of the products as described in the above examples is summarized in table 1 below.

**Table 1.**

| | Chocomousse | | | Vanilla mousse | | Demouldable Pudding | |
|---|---|---|---|---|---|---|---|
| Example | | | | | | | |
| nr. | C1 | C3 | 2 | C2 | 3 | C4 | 4 |
| Load (g) | 59-64 | 63-69 | 76-79 | 51-52 | 35-38 | 68-75 | 53-55 |
| Sensoric evaluation | Pleasantly melting, creamy, not sticky, spoonable. | Sticky mouthfeel, heavy, spoonable. | Creamy, ot sticky, light, spoonable. | Pleasantly melting, not sticky, spoonable. | Creamy, not sticky, spoonable, light. | Smooth, creamy, not sticky, spoonable | Soft, creamy, slightly spoonable. |

The table shows that an excellent dessert can be obtained using the composition of the invention, with good mouthfeel and melting properties. The firmness of the dessert can be modified by adjusting the dosage of the composition. E.g. in the case of the vanilla mousse, raising the amount of composition will result in a higher load.

## Claims

1. Gelatin free dairy dessert comprising less than 10% w/w fat and an unsaturated emulsifier, **characterised in that**
said unsaturated emulsifier comprises a mixture of mono- and diglyceride glycerol esters of unsaturated fatty acids and is present in an amount of 0.2-2.5% w/w.

2. Dessert according to claim 1, comprising 0.6-2.5 w/w%, preferably 0.8-2.5 w/w% and more preferably 1.0-2.0 w/w% unsaturated emulsifier.

3. Dessert according to claim 1 or 2, wherein said unsaturated emulsifier, based on its total weight content, comprises 50-100 w/w%, preferably 50-95 w/w% unsaturated monoglycerides.

4. Dessert according to any of the preceding claims, comprising 0-10 w/w% milk protein and/or soy protein, preferably milk protein, most preferably casein or caseinate.

5. Dessert according to any of the preceding claims, wherein said dessert comprises 0-15 w/w% carbohydrate, preferably chosen from the group consisting of glucose, glucose solids, sucrose, fructose, maltodextrins, lactose, starch, modified starch and artificial starch, or a combination of two or more thereof.

6. Dessert according to any of the preceding claims, wherein said dessert comprises a hydrocolloid, preferably in the range of 0-10 w/w%.

7. Dessert according to claim 6, wherein said hydrocolloid is chosen from the group consisting of galactomannans, carrageenan, carboxymethylcellulose, starch and modified starch, or a combination of two or more thereof.

8. Dessert according to any of the preceding claims, wherein said dessert is an aerated dessert.

9. Composition for use as a gelatine replacer, in particular in dairy desserts, comprising 20 -70 w/w% unsaturated emulsifier, comprising a mixture of mono- and diglyceride glycerol esters of unsaturated fatty acids, 2-10 w/w% of milk protein and/or soy protein, and 20-78 w/w% carbohydrates.

10. Composition according to claim 9, further comprising:
0-50 w/w%, preferably 0-25 w/w% hydrocolloids, chosen from carrageenan, guar gum, carboxymethyl cellulose, modified starches, pectin and alginate,
0-50 w/w%, preferably 0-25 w/w% fat, chosen from milk fat, butter fat and vegetable fat, and
0-40 w/w%, preferably 5-20 w/w% saturated emulsifier.

11. Composition according to claim 9 or 10, the composition being spray dried.

12. Use of a composition according to any of the claims 9 - 11 as a gelatine-replacer, in particular in dairy desserts.

13. Method for the preparation of the composition according to any of the claims 9-11, comprising the steps of:
a) preparing a liquid fat phase comprising unsaturated emulsifier and optionally fat,
b) preparing a water phase comprising a filling agent,
a spray drying aid being comprised in said liquid or said fat phase or both,
c) combining said fat phase a) and said water phase b), and, optionally,
d) homogenising the mixture of c), and/or, optionally,
e) spray drying the homogenate of d).

## Patentansprüche

1. Gelatinefreies Dessert auf Milchbasis, umfassend weniger als 10 Gew.-% Fett und einen ungesättigten Emulgator, **dadurch gekennzeichnet, dass**
der ungesättigte Emulgator ein Gemisch aus Mono- und Diglyceridglycerolestern ungesättigter Fettsäuren umfasst und in einer Menge von 0,2 bis 2,5 Gew.-% vorhanden ist.

2. Dessert nach Anspruch 1, umfassend 0,6 bis 2,5 Gew.-%, bevorzugt 0,8 bis 2,5 Gew.-% und stärker bevorzugt 1,0 bis 2,0 Gew.-% ungesättigten Emulgator.

3. Dessert nach Anspruch 1 oder 2, wobei der ungesättigte Emulgator, auf der Basis seines Gewichtsgehalts, 50 bis 100 Gew.-%, bevorzugt 50 bis 95 Gew.-% ungesättigte Monoglyceride umfasst.

4. Dessert nach einem der vorhergehenden Ansprüche, umfassend 0 bis 10 Gew.-% Milch- und/oder Sojaprotein, bevorzugt Milchprotein, am stärksten bevorzugt Casein und Caseinat.

5. Dessert nach einem der vorhergehenden Ansprüche, wobei das Dessert 0 bis 15 Gew.-% Kohlenhydrat, bevorzugt ausgewählt aus der Gruppe bestehend aus Glucose, Glucosefeststoffen, Saccharose, Fructose, Maltodextrinen, Lactose, Stärke, modifierter Stärke, künstlicher Stärke oder einer Kombination aus zwei oder mehr davon umfasst.

6. Dessert nach einem der vorhergehenden Ansprüche, wobei das Dessert ein Hydrokolloid, bevorzugt im Bereich von 0 bis 10 Gew.-%, umfasst.

7. Dessert nach Anspruch 6, wobei das Hydrokolloid ausgewählt ist aus der Gruppe bestehend aus Galactomannanen, Carrageenan, Carboxymethylcellulose, Stärke, modifizierter Stärke oder einer Kombination aus zwei oder mehr davon.

8. Dessert nach einem der vorhergehenden Ansprüche, wobei das Dessert ein aufgeschlagenes Dessert ist.

9. Zusammensetzung zur Verwendung als Gelatineersatz, insbesondere in Desserts auf Milchbasis, umfassend 20 bis 70 Gew.-% ungesättigten Emulgator, umfassend ein Gemisch aus Mono- und Diglyceridglycerolestern ungesättigter Fettsäuren, 2 bis 10 Gew.-% Milchprotein und/oder Sojaprotein, und 20 bis 78 Gew.-% Kohlenhydraten.

10. Zusammensetzung nach Anspruch 9, ferner umfassend:
0 bis 50 Gew.-%, bevorzugt 0 bis 25 Gew.-% Hydrokolloide, ausgewählt aus Carrageenan, Guargummi, Carboxymethylcellulose, modifizierten Stärken, Pectin und Alginat,
0 bis 50 Gew.-%, bevorzugt 0 bis 25 Gew.-% Fett, ausgewählt aus Milchfett, Butterfett und Pflanzenfett, und
0 bis 40 Gew.-%, bevorzugt 5 bis 20 Gew.-% gesättigtem Emulgator.

11. Zusammensetzung nach Anspruch 9 oder 10, wobei die Zusammensetzung im Sprühverfahren getrocknet wird.

12. Verwendung einer Zusammensetzung nach einem der Ansprüche 9 bis 11 als Gelatineersatz, insbesondere in Desserts auf Milchbasis.

13. Verfahren zur Herstellung der Zusammensetzung nach einem der Ansprüche 9 bis 11, umfassend die folgenden Schritte:
a) Herstellen einer flüssigen Fettphase, umfassend den ungesättigten Emulgator und optional das Fett,
b) Herstellen einer Wasserphase, umfassend das Füllmittel, ein Sprühtrocknungshilfsmittel, das in der flüssigen Phase oder der Fettphase oder in beiden enthalten ist,
c) Kombinieren der Fettphase aus a) und der Wasserphase b), und, optional,
d) Homogenisieren des Gemischs aus c), und/oder optional,
e) Sprühtrocknen des Homogenats aus d).

## Revendications

1. Dessert laitier sans gélatine, comprenant moins de 10 % pds/pds de matière grasse et un émulsifiant insaturé, **caractérisé en ce que :**
ledit émulsifiant insaturé comprend un mélange d'esters de glycérol mono- et diglycéride d'acides gras insaturés et est présent en une quantité de 0,2 à 2,5 % pds/pds.

2. Dessert selon la revendication 1, comprenant de 0,6 à 2,5 % pds/pds, de préférence de 0,8 à 2,5 % pds/pds et de manière davantage préférée de 1,0 à 2,0 % pds/pds d'émulsifiant insaturé.

3. Dessert selon la revendication 1 ou 2, dans lequel ledit émulsifiant insaturé, par rapport à sa teneur en poids totale, comprend de 50 à 100 % pds/pds, de préférence de 50 à 95 % pds/pds de monoglycérides insaturés.

4. Dessert selon l'une quelconque des revendications précédentes, comprenant de 0 à 10 % pds/pds de protéine du lait et/ou de protéine du soja, de préférence de protéine du lait, de manière préférée entre toutes choisie parmi la caséine ou le caséinate.

5. Dessert selon l'une quelconque des revendications précédentes, dans lequel ledit dessert comprend de 0 à 15 % pds/pds d'hydrate de carbone, de préférence choisi dans le groupe constitué par le glucose, les solides contenant du glucose, le sucrose, le fructose, les maltodextrines, le lactose, l'amidon, un amidon modifié, un amidon artificiel ou une combinaison de deux ou plus de ceux-ci.

6. Dessert selon l'une quelconque des revendications précédentes, dans lequel ledit dessert comprend un hydrocolloïde, de préférence dans la plage de 0 à 10 % pds/pds.

7. Dessert selon la revendication 6, dans lequel ledit hydrocolloïde est choisi dans le groupe constitué par les galactomannanes, la carragénine, la carboxyméthylcellulose, l'amidon et l'amidon modifié ou une combinaison de 2 ou plus de ceux-ci.

8. Dessert selon l'une quelconque des revendications précédentes, dans lequel ledit dessert est une mousse.

9. Composition destinée à être utilisée en tant qu'un substitut de la gélatine, en particulier dans les desserts laitiers, comprenant de 20 à 70 % pds/pds d'émulsifiant insaturé, comprenant un mélange d'esters de glycérol mono- et diglycéride d'acides gras insaturés, de 2 à 10 % pds/pds de protéine du lait et/ou de protéine du soja, et de 20 à 78 % pds/pds d'hydrates de carbone.

10. Composition selon la revendication 9, qui comprend en outre :
de 0 à 50 % pds/pds, de préférence de 0 à 25 % d'hydrocolloïdes, choisis parmi la carragénine, la gomme de guar, la carboxyméthylcellulose, les amidons modifiés, la pectine et l'alginate,
de 0 à 50 % pds/pds, de préférence de 0 à 25 % pds/pds de matière grasse, choisie parmi une matière grasse du lait, une matière grasse du beurre et une matière grasse végétale, et
de 0 à 40 % pds/pds, de préférence de 5 à 20 % pds/pds d'un émulsifiant saturé.

11. Composition selon la revendication 9 ou 10, la composition étant séchée par pulvérisation.

12. Utilisation d'une composition selon l'une quelconque des revendications 9 à 11 en tant qu'un substitut de la gélatine, en particulier dans les desserts laitiers.

13. Procédé de préparation de la composition selon l'une quelconque des revendications 9 à 11, qui comprend les étapes consistant à :
a) préparer une phase grasse liquide comprenant l'émulsifiant insaturé et facultativement une matière grasse,
b) préparer une phase aqueuse comprenant un agent de remplissage, un adjuvant de séchage par pulvérisation étant compris dans ladite phase liquide ou ladite phase grasse ou les deux,
c) combiner ladite phase grasse de a) et ladite phase aqueuse de b), et, facultativement,
d) homogénéiser le mélange de c), et/ou, facultativement,
e) sécher par pulvérisation l'homogénat de d).
